# FASCICULE DE BREVET EUROPEEN

(11) **EP 2 456 633 B1**
(45) Date de publication et mention de la délivrance du brevet: **23.04.2014**
(21) Numéro de dépôt: 10752038.9
(22) Date de dépôt: 19.07.2010
(51) Int. Cl.: B60K 37/00, B60R 21/34

(54) **STRUCTURE DE PLANCHE DE BORD DE VÉHICULE AUTOMOBILE ET VÉHICULE AUTOMOBILE COMPORTANT UNE TELLE STRUCTURE.**
ARMATURENBRETTSTRUKTUR EINES KRAFTFAHRZEUGS UND KRAFTFAHRZEUG MIT EINER SOLCHEN STRUKTUR.
STRUCTURE OF A MOTOR VEHICLE DASHBOARD AND MOTOR VEHICLE WITH SUCH A STRUCTURE.

(30) Priorité: 21.07.2009 FR 0955072
(43) Date de publication de la demande: 30.05.2012
(73) Titulaire: Faurecia Intérieur Industrie, 92000 Nanterre (FR)
(72) Inventeur: MOREL, Jean-Pierre, F-95650 Boissy L'aillerie (FR)
(74) Mandataire: Jacobson, Claude
(86) Numéro de dépôt international: PCT/FR2010/051507
(87) Numéro de publication internationale: WO 2011/010053

(56) Documents cités:
- EP-A- 1 808 364
- DE-A1-102005 016 646
- DE-A1-102006 029 921
- FR-A- 2 897 578
- JP-A- 2005 035 325
- US-A- 5 660 426

## Description

La présente invention concerne une structure de planche de bord de véhicule automobile, du type comprenant un panneau destiné à être placé sous un pare-brise et une traverse inférieure espacée de ce panneau et s'étendant au-dessous dudit panneau. La publication EP 1 808 364 A divulgue une structure d'après le préambule de la revendication 1.

L'invention concerne également un véhicule automobile comprenant une telle structure de planche de bord.

En cas de choc entre un piéton et la partie avant d'un véhicule automobile, il se peut que la tête du piéton vienne heurter le pare-brise, ce qui peut lui causer de graves lésions. Afin de réduire ce risque, il est connu de prévoir un pare-brise agencé pour s'étoiler et pour s'enfoncer vers la planche de bord en cas de choc afin d'absorber une partie de l'énergie due au choc.

Il est également connu de prévoir une planche de bord se déformant sous l'effet dé l'enfoncement du pare-brise, par exemple en réalisant les conduits d'air de la planche de bord avec un matériau apte à absorber de l'énergie.

Il est aussi connu d'intégrer dans la planche de bord des éléments aptes à absorber une partie de l'énergie due au choc, comme par exemple un plastron déformable et rapporté sur la planche de bord ou un coussin gonflable.

Mais cette solution, par l'ajout de pièces, entraîne une augmentation de la masse de la planche de bord et des opérations d'assemblage supplémentaires.

D'une manière générale, l'absorption d'énergie par les moyens décrits ci-dessus ne donne pas entièrement satisfaction et n'est pas suffisante pour protéger le piéton de façon optimale en cas de choc contre la partie avant du véhicule automobile.

Par conséquent, il existe toujours un risque important de causer des lésions à la tête d'un piéton en cas de choc.

L'un des buts de l'invention est de palier à ces inconvénients en proposant une structure de planche de bord permettant d'améliorer l'absorption de l'énergie due à un choc contre le pare-brise d'un véhicule automobile.

A cet effet, l'invention concerne une structure de planche de bord de véhicule automobile comprenant un panneau destiné à être placé sous un pare-brise et une traverse inférieure espacée de ce panneau et s'étendant au-dessous dudit panneau, caractérisée en ce que ledit panneau comprend une zone d'impact comportant au moins une jambe s'étendant à partir de la zone d'impact et en appui sur la traverse inférieure, ladite au moins jambe étant apte à se plier vers le panneau dans le cas d'un choc entraînant un enfoncement de la zone d'impact vers la traverse inférieure en absorbant de l'énergie due à ce choc.

Selon d'autres caractéristiques de la structure de planche de bord :
- ladite au moins jambe s'étend dans la direction longitudinale du véhicule et inclinée vers le côté de ce véhicule,
- la zone d'impact comprend au moins une paire de jambes inclinées chacune dans une direction opposée l'une par rapport à l'autre,
- chaque jambe est reliée à la zone d'impact et comporte au niveau de cette liaison une ligne d'affaiblissement localisée du côté du pliage de ladite jambe contre le panneau,
- la zone d'impact comporte au moins une ligne d'affaiblissement formant une amorce de pliage,
- ladite au moins ligne d'affaiblissement s'étend au moins le long de chaque bord de la zone d'impact,
- la zone d'impact du panneau est formée par une paroi mono-épaisseur, et
- le panneau et ladite au moins jambe sont obtenus par moulage par injection d'un matériau plastique.

L'invention concerne également un véhicule automobile comprenant un pare-brise et une structure de planche de bord telle que décrite ci-dessus, ladite structure comprenant un panneau muni d'une zone d'impact disposée sous et en regard du pare-brise et étant agencée pour s'enfoncer vers la traverse inférieure en cas de choc contre la pare-brise en regard de ladite zone d'impact du panneau.

D'autres aspects et avantages de l'invention apparaîtront à la lecture de la description qui va suivre, donnée à titre d'exemple et faite en référence aux dessins annexés, sur lesquels :
- la Fig. 1 est une vue schématique en perspective d'une structure de planche de bord conforme à l'invention, disposée sous un pare-brise de véhicule automobile,
- la Fig. 2 est une vue partielle en coupe selon la ligne II-II de la Fig. 1, avant un choc contre le pare-brise,
- la Fig. 3 est une vue analogue à la Fig. 2, montrant la déformation de la structure suite au choc contre le pare-brise,
- la Fig. 4 est une vue schématique en coupe selon la ligne IV-IV de la Fig. 1, avant un choc contre le pare-brise, et
- la Fig. 5 est une vue analogue à la Fig. 4, montrant la déformation de ladite structure suite au choc contre le pare-brise.

Dans la description qui suit, les termes «avant», «arrière», «dessus», «dessous», etc... sont définis par rapport aux directions usuelles d'un véhicule automobile.

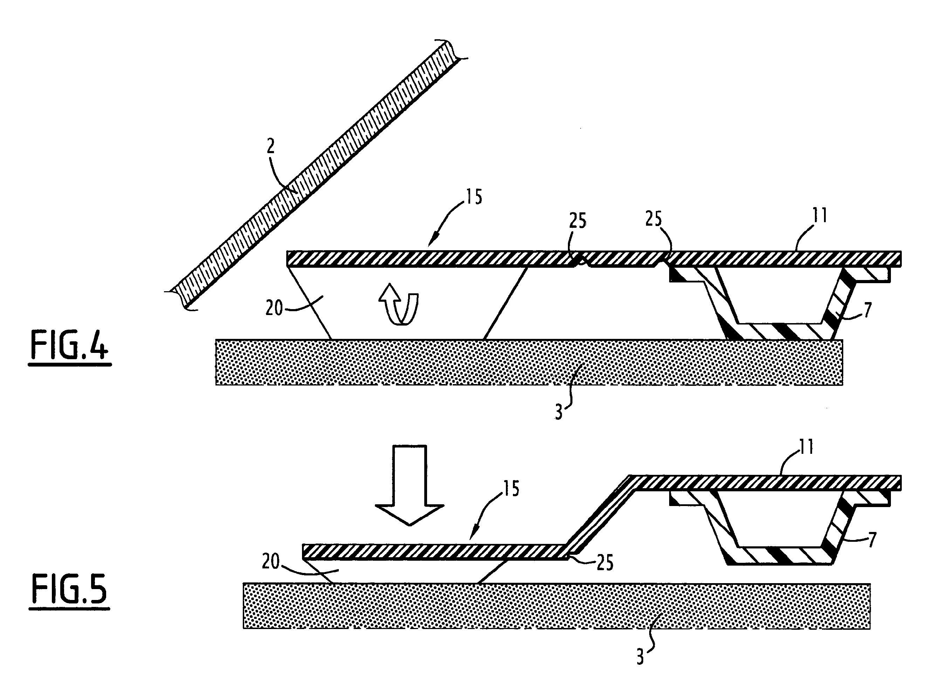

En se reportant aux figures, on décrit une structure de planche de bord désignée par la référence générale 1, disposée sous et en regard d'un pare-brise 2 (Fig. 4) d'un véhicule automobile.

La structure de planche de bord 1 comprend un corps de planche de bord 10 et une traverse inférieure 3 disposée sous le corps de planche de bord 10. La traverse inférieure 3 est la traverse inférieure de baie du véhicule automobile, solidarisée au corps de la planche de bord 10 par un jambage, non représenté, de façon classique.

Le corps de planche de bord 10 est soutenu par une traverse de support, non représentée, ou traverse de cockpit, de façon classique.

Le corps de planche de bord 10 dénommé dans ce qui suit, planche de bord, comprend, à sa partie avant, un panneau 11 disposé au voisinage et directement sous le pare-brise 2.

La partie extrême avant du panneau 11 comprend des moyens de maintien, non représentés de ce panneau 11 par rapport au pare-brise 2. Ces moyens de maintien sont par exemple formés par des agrafes ou des plots soutenant le panneau 11 selon la direction verticale ou autre.

De manière classique, la planche de bord 10 est réalisée par exemple par injection d'une matière plastique revêtue d'une peau de garnissage et comprend des organes fonctionnels habituels.

Entre le panneau 11 et la traverse inférieure 3 est localisé un ensemble intermédiaire désigné par la référence générale 5 qui comprend notamment une ouverture 6 de raccordement avec un dispositif de climatisation, non représenté, et un conduit de dégivrage 7 s'étendant sous le pare-brise 2 et relié à l'ouverture 6.

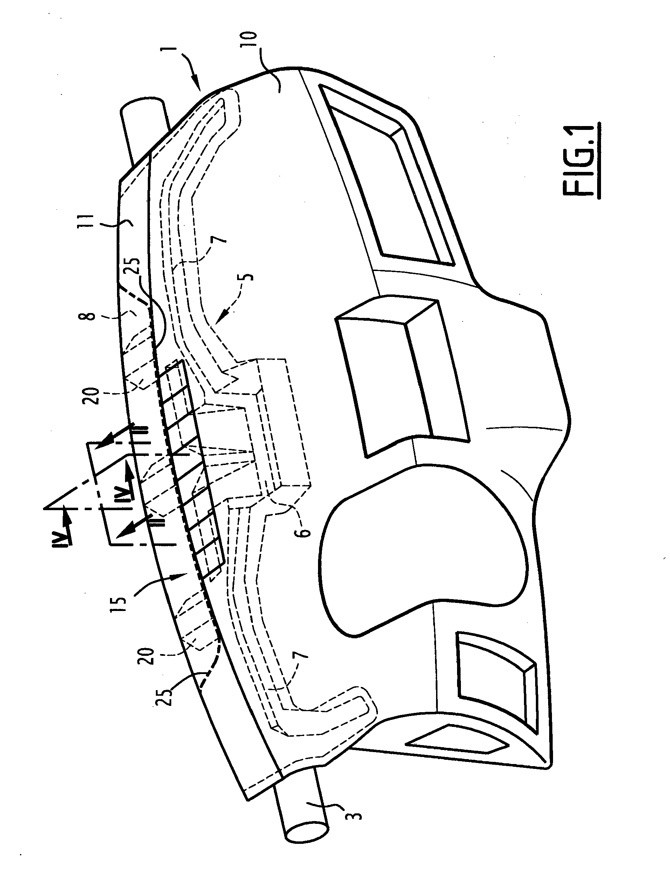

Ainsi que montré à la Fig. 1, l'ensemble intermédiaire 5 comporte, à sa partie avant, une zone échancrée 8 de telle sorte que la zone 15 du panneau 11 située au-dessus de cette zone échancrée 8 soit directement placée au-dessus de la traverse inférieure 3.

Ainsi, cette zone 15 du panneau 11 placée au-dessus de la traverse inférieure 3 ménage avec ladite traverse inférieure 3 un espace et constitue une zone d'impact 15.

Cette zone d'impact 15 est formée par une paroi mono-épaisseur.

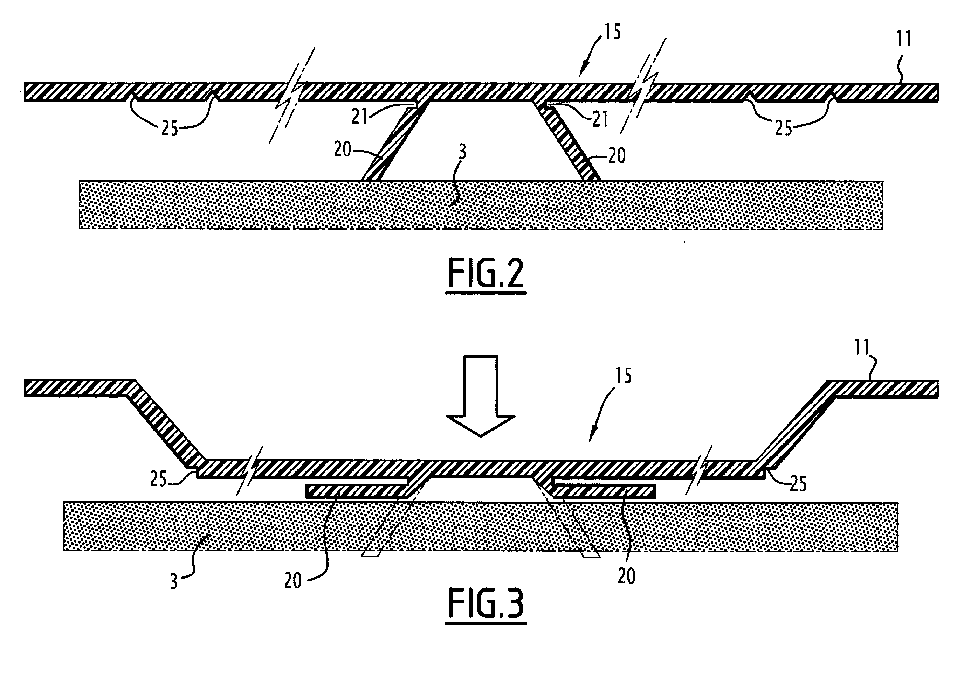

Sur les Figs. 2 à 5, les épaisseurs des différentes pièces ont été volontairement exagérées afin de faciliter la compréhension.

Ainsi que montré sur les Figs. 1 et 2, la zone d'impact 15 du panneau 11, c'est-à-dire la zone de ce panneau 11 située directement au-dessus de la traverse inférieure 3, comporte au moins une jambe 20 s'étendant à partir de la zone d'impact 15 et en appui sur la traverse inférieure 3.

D'une manière générale, ladite au moins jambe 20 est apte à se plier vers le panneau 11 dans le cas d'un choc entraînant un enfoncement de la zone d'impact 15 vers la traverse inférieure 3 en absorbant de l'énergie due à ce choc, comme on le verra ultérieurement.

De préférence, ladite au moins jambe 20 s'étend dans la direction longitudinale du véhicule et est inclinée vers le côté de ce véhicule.

Dans l'exemple de réalisation représenté sur les figures, la zone d'impact 15 du panneau 11 comprend au moins une paire de jambes 20 et, de préférence, trois paires de jambes 20. Les jambes 20 de chaque paire sont inclinées chacune dans une direction opposée l'une par rapport à l'autre et, plus particulièrement l'une des jambes 20 est inclinée vers le coté gauche du véhicule et l'autre jambe 20 de la paire correspondante est inclinée vers le côté droit du véhicule. Ainsi, les jambes 20 forment entre elles un angle aigu.

Chaque jambe 20 comporte au niveau de sa ligne de liaison avec la zone d'impact 15 du panneau 11, une ligne d'affaiblissement 21 localisée du côté du pliage de ladite jambe 20 contre le panneau 11, cette ligne d'affaiblissement 21 constituant une amorce de pliage.

Enfin, la zone d'impact 15 du panneau 11 comporte au moins une ligne d'affaiblissement 25 formant une amorce de pliage lors d'un choc et cette ligne d'affaiblissement s'étend au moins le long de chaque bord de ladite zone d'impact 11.

De préférence et ainsi que montré sur les Figs. 2 et 4, la zone d'impact 11 comporte, au niveau de chacun de ses bords latéraux et de son bord transversal au moins une ligne d'affaiblissement 25 et, de préférence, deux lignes d'affaiblissement 25 parallèles.

La planche de bord 10 comprenant le panneau 11 et les jambes 20 est obtenue par moulage par injection d'un matériau plastique.

En se reportant maintenant aux Figs. 2 à 5, on va décrire le comportement de la structure de planche de bord 1 en cas de choc contre le pare-brise 2 du véhicule automobile.

Le choc entre un objet, par exemple la tête d'un piéton, et le pare-brise 2 entraîne un enfoncement de ce pare-brise 2 vers la zone d'impact 15 du panneau 11.

Le pare-brise 2 se déforme en s'étoilant et en absorbant déjà une partie de l'énergie due au choc. Sous l'effet de son enfoncement, le pare-brise 2 vient au contact de la zone d'impact 15 du panneau 11 et entraîne l'enfoncement de celle-ci selon une direction sensiblement verticale.

Les lignes d'affaiblissement 25 ménagées sur les bords de la zone d'impact 15 du panneau 11 amorcent le pliage de cette zone d'impact 15.

Lors de l'enfoncement de la zone d'impact 15, les jambes 20 en appui contre la traverse inférieure 3 se replient progressivement contre la face intérieure du panneau 11 grâce aux lignes d'affaiblissement 21 qui constituent des amorces de pliage, ainsi que montré sur la Fig. 3.

Ces jambes 20 forment chacune un ressort et permettent d'absorber une partie de l'énergie due au choc pendant l'enfoncement de la zone d'impact 15 du panneau 11.

Par ailleurs, les jambes 20 intégrées à la planche de bord 10 participent à la tenue au fluage de la zone d'impact 15 et assurent la rigidité de cette zone en ensoleillement et en vibration.

La rigidification de la planche de bord 10 des zones situées en dehors de la zone d'impact 15 est assurée par les conduits de dégivrage 7 de l'ensemble intermédiaire 5 qui est soudé avec la planche de bord 10. Une double épaisseur existe donc dans ces zones en dehors de la zone d'impact.

Avec la structure de planche de bord selon l'invention, la fonction d'absorption d'énergie est assurée uniquement par le corps de planche de bord ce qui évite l'ajout de pièces supplémentaires et permet d'éviter une augmentation de la masse de la planche de bord.

De plus, la structure de planche de bord décrite ci-dessus permet d'améliorer la protection des piétons en améliorant l'absorption d'énergie en cas de choc contre le pare-brise du véhicule.

Cette amélioration est obtenue en faisant participer la planche de bord à l'absorption d'énergie et une telle planche de bord est simple à mettre en oeuvre et à monter dans un véhicule automobile.

## Revendications

1. Structure de planche de bord (1) de véhicule automobile, comprenant :
- un corps de planche de bord (10), ledit corps de planche de bord (10) comprenant un panneau (11) destiné à être placé sous un pare-brise (2), et
- une traverse inférieure (3) espacée de ce panneau (11) et s'étendant au-dessous dudit panneau (11),
**caractérisée en ce que** ledit panneau (11) comprend une zone d'impact (15) comportant au moins une jambe (20) s'étendant à partir de la zone d'impact (15) et en appui sur la traverse inférieure (3), ladite au moins jambe (20) étant apte à se plier vers le panneau (11) dans le cas d'un choc entraînant un enfoncement de la zone d'impact (15) vers la traverse inférieure (3) en absorbant l'énergie due à ce choc.

2. Structure de planche de bord (1) selon la revendication 1, **caractérisée en ce que** ladite au moins jambe (20) s'étend dans la direction longitudinale du véhicule et est inclinée vers le côté de ce véhicule.

3. Structure de planche de bord (1) selon la revendication 1 ou 2, **caractérisée en ce que** la zone d'impact (15) comprend au moins une paire de jambes (20) inclinées chacune dans une direction opposée l'une par rapport à l'autre.

4. Structure de planche de bord (1) selon l'une quelconque des revendications 1 à 3, **caractérisée en ce que** chaque jambe (20) est reliée à la zone d'impact (15) et comporte au niveau de cette liaison une ligne d'affaiblissement (21) localisée du côté du pliage de ladite jambe (20) contre le panneau (11).

5. Structure de planche de bord (1) selon l'une quelconque des revendications précédentes, **caractérisée en ce que** la zone d'impact (15) comporte au moins une ligne d'affaiblissement (25) formant une amorce de pliage.

6. Structure de planche de bord (1) selon la revendication 5, **caractérisée en ce que** ladite au moins ligne d'affaiblissement (25) s'étend au moins le long de chaque bord de la zone d'impact (15).

7. Structure de planche de bord (1) selon l'une quelconque des revendications précédentes, **caractérisée en ce que** la zone d'impact (15) du panneau (11) est formée par une paroi mono-épaisseur.

8. Structure de planche de bord (1) selon l'une quelconque des revendications précédentes, **caractérisée en ce que** le panneau (11) et ladite au moins une jambe (20) sont obtenus par moulage par injection d'un matériau plastique.

9. Véhicule automobile comprenant un pare-brise (2) et une structure de planche de bord (1) selon l'une quelconque des revendications 1 à 8, ladite structure (1) comprenant un panneau (11) muni d'une zone d'impact (15) disposée sous et en regard du pare-brise (2) et étant agencée pour s'enfoncer vers la traverse inférieure (3) en cas de choc contre le pare-brise (2) en regard de ladite zone d'impact (15) du panneau (11).

## Patentansprüche

1. Aufbau einer Instrumententafel (1) eines Kraftfahrzeugs, umfassend:
- einen Instrumententafelkörper (10), der eine Tafel (11) umfasst, die dazu vorgesehen ist, unter einer Windschutzscheibe (2) angeordnet zu werden, und
- eine untere Travers (3), die von dieser Tafel (11) beabstandet ist und sich unter der Tafel (11) erstreckt,
**dadurch gekennzeichnet, dass** die Tafel (11) eine Auftreffzone (15) umfasst, die mindestens eine Strebe (20) aufweist, die sich von der Auftreffzone (15) erstreckt und auf der unteren Traverse (3) aufliegt, wobei die mindestens eine Strebe (20) geeignet ist, sich zu der Tafel (11) in dem Fall eines Stoßes, der ein Eindrücken der Auftreffzone (15) zu der unteren Traverse (3) nach sich zieht, zu biegen, wobei die durch diese Stoß bewirkte Energie absorbiert wird.

2. Aufbau einer Instrumententafel (1) nach Anspruch 1, **dadurch gekennzeichnet, dass** die mindestens eine Strebe (20) sich in der Längsrichtung des Fahrzeugs erstreckt und zu der Seite dieses Fahrzeugs geneigt ist.

3. Aufbau einer Instrumententafel (1) nach Anspruch 1 oder 2, **dadurch gekennzeichnet, dass** die Auftreffzone (15) mindestens ein Paar von Streben (20) umfasst, die jeweils in zueinander entgegengesetzte Richtung geneigt sind.

4. Aufbau einer Instrumententafel (1) nach einem beliebigen der Ansprüche 1 bis 3, **dadurch gekennzeichnet, dass** jede Strebe (20) mit der Auftreffzone (15) verbunden ist und an dieser Verbindung eine Schwächungslinie (21) aufweist, die auf der Seite der Biegung der Strebe (20) gegen die Tafel (11) lokalisiert ist.

5. Aufbau einer Instrumententafel (1) nach einem beliebigen der vorhergehenden Ansprüche, **dadurch gekennzeichnet, dass** die Auftreffzone (15) mindestens eine Schwächungslinie (25) aufweist, die eine Auslösestelle für die Biegung bildet.

6. Aufbau einer Instrumententafel (1) nach Anspruch 5, **dadurch gekennzeichnet, dass** die mindestens eine Schwächungslinie (25) sich entlang jedes Randes der Auftreffzone (15) erstreckt.

7. Aufbau einer Instrumententafel (1) nach einem beliebigen der vorhergehenden Ansprüche, **dadurch gekennzeichnet, dass** die Auftreffzone (15) der Tafel (11) durch eine einschichtige Wand gebildet wird.

8. Aufbau einer Instrumententafel (1) nach einem beliebigen der vorhergehenden Ansprüche, **dadurch gekennzeichnet, dass** die Tafel (11) und die mindestens eine Strebe (20) durch Einspritzformen eines Kunststoffs hergestellt werden.

9. Kraftfahrzeug, das eine Windschutzscheibe (2) und einen Aufbau einer Instrumententafel (1) nach einem beliebigen der Ansprüche 1 bis 8 umfasst, wobei der Aufbau (1) eine Tafel (11) umfasst, die mit einer Auftreffzone (15) ausgerüstet ist, die unter und gegenüber der Windschutzscheibe (2) angeordnet ist und ausgebildet ist, sich zu der unteren Travers (3) im Fall eines Stoßes gegen die Windschutzscheibe (2) gegenüberliegend zu der Auftreffzone (15) der Tafel (11) einzudrücken.

## Claims

1. Dashboard structure (1) for a motor vehicle, comprising:
- a dashboard body (10), the said dashboard body (10) comprising a panel (11) which is intended to be located underneath a windscreen (2), and
- a lower cross-member (3) which is spaced apart from this panel (11) and extends below the said panel (11); **characterised in that** the said panel (11) comprises an impact zone (15) comprising at least one leg (20) extending from said impact zone (15) and resting on the lower cross-member (3), the said at least one leg (20) being adapted to fold towards the panel (11), in the event of an impact leading to giving-way of the impact zone (15) towards the lower cross-member (3), thereby absorbing the energy due to the said impact.

2. Dashboard structure (1) according to Claim 1, **characterised in that** the said at least one leg (20) extends in the longitudinal direction of the vehicle and is inclined towards the side of the said vehicle.

3. Dashboard structure (1) according to Claim 1 or 2, **characterised in that** the impact zone (15) comprises at least one pair of legs (20) which are each inclined in an opposite direction in relation to one another.

4. Dashboard structure (1) according to any of Claims 1 to 3, **characterised in that** each leg (20) is connected to the impact zone (15) and comprises, at the said connection, a weakening line (21) which is located on the side on which the said leg (20) folds against the panel (11).

5. Dashboard structure (1) according to any of the preceding claims, **characterised in that** the impact zone (15) comprises at least one weakening line (25) which forms a starting point for folding.

6. Dashboard structure (1) according to Claim 5, **characterised in that** the said at least one weakening line (25) extends at least along each edge of the impact zone (15).

7. Dashboard structure (1) according to any of the preceding claims, **characterised in that** the impact zone (15) of the panel (11) is formed by a single-thickness wall.

8. Dashboard structure (1) according to any of the preceding claims, **characterised in that** the panel (11) and the said at least one leg (20) are obtained by the injection-moulding of a plastic material.

9. Motor vehicle comprising a windscreen (2) and a dashboard structure (1) according to any of Claims 1 to 8, the said structure (1) comprising a panel (11) provided with an impact zone (15) which is disposed underneath and opposite the windscreen (2) and which is arranged so as to give way towards the lower cross-member (3) in the event of an impact against the windscreen (2) opposite the said impact zone (15) of the panel (11).
